# EUROPÄISCHE PATENTSCHRIFT

(11) **EP 0 459 444 B1**
(45) Veröffentlichungstag und Bekanntmachung des Hinweises auf die Patenterteilung: **01.09.1993**
(21) Anmeldenummer: 91108790.6
(22) Anmeldetag: 29.05.1991
(51) Int. Cl.: C02F 1/20, B01D 19/00

(54) **Verfahren und Anlage zum in-situ Dekontaminieren von mit Kohlenwasserstoffen durchsetztem Grundwasser**
Method and system for in situ decontamination of ground water mixed with hydrocarbons
Procédé et installation pour décontaminer in situ des eaux souterraines polluées par des hydrocarbures

(30) Priorität: 31.05.1990 DE 4017642
(43) Veröffentlichungstag der Anmeldung: 04.12.1991
(73) Patentinhaber: SANTEC GMBH, D-12347 Berlin (DE)
(72) Erfinder: Hundenborn, Bernd, W-1000 Berlin 49 (DE)
(74) Vertreter: Patentanwälte Leinweber & Zimmermann

(56) Entgegenhaltungen:
- AU-D- 2 252 377
- US-A- 4 713 089
- US-A- 4 844 795

## Beschreibung

Die Erfindung bezieht sich auf eine Anlage zur in-situ-Dekontamination von mit Kohlenwasserstoffen durchsetztem Grundwasser.

Bei bekannten Anlagen dieser Art (DE--A- 38 05 200, 37 28 299, 38 11 962, 39 10 990 sowie 36 25 488) wird oberhalb eines Brunnenschachts, der in den das dekontaminierte Grundwasser enthaltenden Bodenbereich ragt, ein Unterdruck erzeugt, unter dessen Wirkung Luft aus dem Boden abgesaugt wird, die durch in den Bodenbereich eindringende frische Luft ersetzt wird. Letztere nimmt die in gasförmigem Zustand befindlichen Kohlenwasserstoffe auf, so daß sie sich durch das Absaugen abführen lassen. Anschließend werden sie in einem Reinigungsprozeß der Luft entzogen, die anschließend in die Atmosphäre freigegeben werden kann. Der erforderliche Apparate- und Maschinen-Aufwand dieser Anlagen ist hoch, und dennoch ist der Reinigungseffekt begrenzt, bedingt durch die relativ niedrige Druckdifferenz, die maximal wirksam wird.

Eine Anlage zur in-situ Dekontamination von Grundwasser ist aus AU- B- 22527/77 ebenfalls bekannt.

Diese Anlage werst ein Brunnenrohr, das bis unter den Grunfwasserspiegel vercht und eine in das Brunnenrohr einsetzbave Rohreinheit auf.

Gemäß einem Ausführungsbeispiel kann die Rohreinheit Abstripprohr sein, in dessen unterem Ende das wasser mit Druckluft begast wird.

Überraschenderweise läßt sich der Reinigungsprozeß auf einfache und effektivere Weise mit geringem Aufwand mit einer Anlage erreichen, die gekennzeichnet ist durch ein Brunnenrohr, das bis unter den Grundwasserspiegel reicht, eine in das Brunnenrohr einsetzbare, ebenfalls unterhalb des Grundwasserspiegels endende Rohreinheit aus einem Abstripprohr sowie mindestens zwei das Abstripprohr konzentrisch mit Abstand umgebenden, miteinander und mit dem Abstripprohr fest verbundenen Rohrabschnitten nämlich einem inneren Rohrabschnitt und einem äußeren Rohrabschnitt, sowie einem unterhalb des Abstripprohrs mündenden Begaser, wobei der äußere Rohrabschnitt eine Abdichtung gegenüber dem Brunnenrohr aufweist und mit seiner Oberkante in Höhe von im Brunnenrohr vorgesehenen Abströmöffnungen liegt, denen im Abstripprohr oberhalb des Grundwasserspiegels Überströmöffnungen zugeordnet sind, wobei der innere Rohrabschnitt mit seiner Oberkante oberhalb der Überströmöffnungen des Abstripprohrs gegenüber letzterem abgedichtet ist und mit seiner unteren Kante der Umlenkung des im inneren Ringraum zwischen dem Abstripprohr und dem inneren Rohrabschnitt abwärts und im äußeren Ringraum zwischen innerem Rohrabschnitt und äußerem Rohrabschnitt aufwärts zu den Abströmffnungen strömenden Grundwassers dient.

Durch Eintrag des Treibgases am unteren Rohrende wird Grundwasser nach oben gefördert. Der dabei auftretende Strippeffekt entzieht dem Grundwasser die vorhandenen leichtflüchtigen Verunreinigungen, die auf das Treibgas übertragen und so ausgestrippt werden. Das nach dem Mammutpumpenprinzip (Flüssigkeitsförderung im senkrechten Rohr durch Gaseintrag) hoch geförderte Wasser strömt über die Kanten der Überströmöffnungen des Abstripprohrs in den inneren Ringraum und in diesem nach abwärts, gelangt am unteren Ende in den äußeren Ringraum, strömt in diesen nach aufwärts und tritt schließlich über die Abströmöffnungen des Brunnenrohrs in das letzteres umgebende Erdreich aus. Das die Verunreinigungen enthaltende Gas wird am oberen Ende des Abstripprohrs zu einem Filter, beispielsweise einem Aktivkohlefilter abgeleitet und so gereinigt. In sehr günstiger Weise dient der innere Ringraum bei dieser Anlage gleichzeitig als Wasserschloß, da er ein Entweichen beladener Abluft in das Erdreich verhindert.

Diese Anlage ist gegenüber den eingangs erwähnten mit Unterdruck arbeitenden bekannten Anlagen deshalb mit dem Vorteil verbunden, daß das Brunnenrohr mitsamt dem Abstripprohr und den beiden Rohrabschnitten genau in das Schadenzentrum hineingeführt werden kann, notfalls auch durch dichte Zonen, beispielsweise Lehmschichten hindurchgeführt werden kann, um dort gezielt die gewünschte Dekontamination vorzunehmen. Erwähnenswert ist ferner, daß sich mit Hilfe dieser Anlage der jeweils geeignete Druck für das Begasen und damit die jeweils optimale Druckdifferenz im jeweils günstigsten Bodenbereich wählen und den Bedürfnissen entsprechend einstellen läßt. Dagegen ist beim herkömmlichen Arbeiten mit Unterdruck eine bestimmte Druckdifferenz, die im übrigen über einen vergleichsweise großen Bereich in gleicher Weise wirkt, nicht überschreitbar. Bei Ersatz der erfindungsgemäßen Anlage läßt sich somit die jeweils benötigte Gasmenge gezielt frei wählen.

Als sehr zweckmäßig hat es sich erwiesen, wenn im unteren Bereich des inneren Ringraums ein zusätzlicher Begaser vorgesehen ist. Dieser ermöglicht es, das im inneren Ringraum nach abwärts strömende Wasser zusätzlich zu begasen, d. h. einem Nachstrippvorgang zu unterziehen. Durch Steuerung der Gasmenge läßt sich in vorteilhafter Weise gleichzeitig eine Steuerung des Wasserflusses erreichen. Der Wasserfluß wird im allgemeinen so eingestellt, daß die Aufwärtsströmung laminar ist. Dadurch wird der Ausgasvorgang verstärkt. Am Ende des Nachstrippvorgangs fließt das über den Zusatzbegaser zugeleitete, ebenfalls Verunreinigungen enthaltende Gas über die Überströmöffnungen in das Abstripprohr und in diesem weiter nach aufwärts bis zur Überführung in den Aktivkohlefilter.

Als in weiterer vorteilhafter Ausgestaltung der Anlage sehr günstig hat es sich herausgestellt, wenn am unteren Ende des Brunnenrohrs eine Schlammpumpe angeordnet ist. Mit Hilfe dieser Schlammpumpe läßt sich Schlamm und Verockerung, die sich im Laufe der Zeit bildet, abführen. Zusätzlich ist es möglich, zu Beginn des Einsatzes der Anlage bei sehr starken Kontaminationen den Mammutpumpeneffekt durch Verwendung der Schlammpumpe als Brunnenpumpe zu unterstützen, die das Grundwasser nach aufwärts pumpt.

Zweckmäßigerweise ist das untere Ende des Brunnenrohrs als Filter für das eintretende Grundwasser ausgebildet.

Als sehr günstig im Hinblick auf eine vielseitige Verwendbarkeit der erfindungsgemäßen Anlage hat es sich bei Einsatz als Bioreaktor unter Verwendung von die Schadstoffe abbauenden Mikroorganismen erwiesen, wenn für die Zufuhr der Mikroorganismen ein durch das Abstripprohr hindurch in den unteren Bereich in der Nähe des Begasers geführtes Rohr vorgesehen ist. In diesem Zusammenhang ist es von Vorteil, wenn im Abstand vom Brunnenrohr in das Erdreich eingebrachte Beobachtungsbrunnen vorgesehen sind, die gleichzeitig als Versorgungsbrunnen zum Eintrag von Salzen und/oder Nährlösungen und Sauerstoff für die Mikroorganismen ausgebildet sind.

Andererseits kann bei erhöhtem Sauerstoffgehalt aufgrund einer Sauerstoffzufuhr im oberen Bereich auch eine Verockerung erfolgen. Diese ist dann erwünscht, wenn sie eine Abdichtung vornimmt und dazu führt, daß das ablaufende Wasser einen weiteren Weg bis zum Wiederabsacken nehmen muß, ehe es zum Brunnenrohr zurückfließen kann. In diesem Zusammenhang sei erwähnt, daß sich bei der Anlage nach der Erfindung in bekannter Weise als Treibgas auch ein inertes Gas, vorzugsweise Stickstoff einsetzen läßt. Durch Verwendung von inertem Gas anstelle von Sauerstoff enthaltender Luft, was deshalb möglich ist, weil eine Rückgewinnung und Reinigung derartiger Gase ohne große Probleme möglich ist, läßt sich die manchmal nachteilige Verockerung vermeiden. Werden zusätzlich Schadstoffe abbauende Mikroorganismen zugeführt, dann ist sogar die Möglichkeit gegeben, das Verfahren in der Weise auszugestalten, daß anaerob arbeitende Mikroorganismen eingesetzt werden, d.h. Mikroorganismen, die unter Ausschluß von Sauerstoff aktiv sind.

Als weiterer Vorteil der Anlage ist zu erwähnen, daß sie mit unterschiedlichen Abmessungen, d. h. auch mit relativ kleinen Durchmessern hergestellt werden kann, beispielsweise mit einem Brunnenrohr, das einen Durchmesser von etwa 200 mm besitzt, sowie einer einzuschiebenden Rohreinheit, bei der das Abstripprohr einen Durchmesser von 150 mm besitzt. Versuche haben gezeigt, daß auch noch kleinere Durchmesser erreichbar sind, so daß sich Anlagen hoher Effektivität mit sehr geringen Herstellungskosten einsetzen lassen.

Als weiterer Vorteil ist zu erwähnen, daß die Rohreinheit innerhalb des Brunnenrohrs höhenmäßig verstellbar ist. Auf diese Weise läßt sich die Abluftgeschwindigkeit (Wasserberg) erhöhen. Da man aufgrund des Mammutpumpeneffekts mit einer 20- bis 40%igen Erhöhung des Wasserspiegels innerhalb der Rohreinheit rechnen kann, ergibt sich bei einer Wassertiefe von 6 m im Bereich der Abströmöffnungen eine Erhöhung des "Wasserberges" von ca. 1,20 m (20 %).

Weitere Einzelheiten, Vorteile und Merkmale der Erfindung ergeben sich aus der folgenden Beschreibung und der Zeichnung, auf die bezüglich der Offenbarung aller nicht im Text beschriebenen Einzelheiten ausdrücklich verwiesen wird. Es zeigen:
- Fig. 1: eine schematische Schnittansicht durch einen Bodenbereich, in dem die Anlage nach der Erfindung zum Einsatz gelangt, entsprechend der Linie I-I der Figur 2,
- Fig. 2: eine Draufsicht auf den Bodenbereich nach Fig. 1 und
- Fig. 3: einen Axialschnitt durch die erfindungsgemäße Anlage.

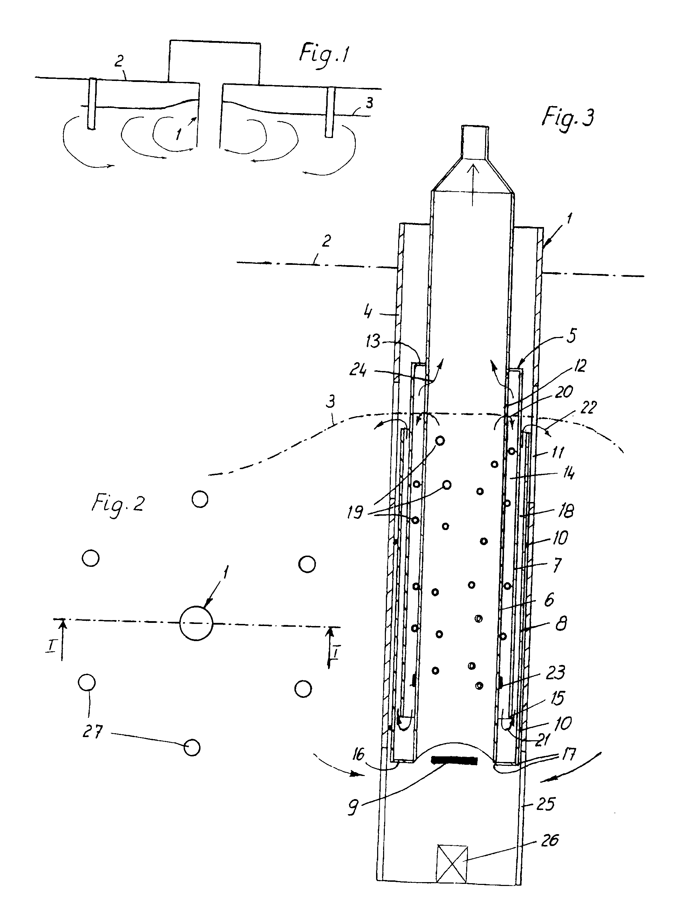

Wie aus der Zeichnung ersichtlich, ist für das in-situ-Dekontaminieren von mit Kohlenwasserstoffen durchsetztem Grundwasser eine Anlage 1 vorgesehen, die ein von der Geländeoberkante 2 in den verseuchten Bodenbereich bis unter den Grundwasserspiegel 3 reichendes Brunnenrohr 4 umfaßt. Im Brunnenrohr 4 ist eine Rohreinheit 5 höhenverstellbar festgelegt. Sie reicht ebenfalls bis unter den Grundwasserspiegel 3. Diese Rohreinheit besteht aus einem inneren Abstripprohr 6 sowie zwei das Abstripprohr etwa konzentrisch umgebenden, miteinander und mit dem Abstripprohr fest verbundenen Rohrabschnitten, nämlich einem inneren Rohrabschnitt 7 und einem äußeren Rohrabschnitt 8. Unterhalb des Abstripprohrs 6 mündet ein dem Einführen von frischem Gas in das Grundwasser dienender Begaser 9, mit dessen Hilfe gleichzeitig der Grundwasserspiegel 3 im Bereich des Brunnenrohrs 4 anhebbar ist, so daß gewissermaßen ein "Grundwasserberg" entsteht. Der äußere Rohrabschnitt 8 weist eine Abdichtung 10 gegenüber dem Brunnenrohr 4 auf. Im Brunnenrohr sind Abströmöffnungen 11 vorgesehen, die in Form von Schlitzen oder dergleichen ausgebildet sind. Analog sind im Abstripprohr 6 oberhalb des Grundwasserspiegels Überströmöffnungen 12 ausgebildet. Der innere Rohrabschnitt 7 ist mit seiner Oberkante oberhalb der Überströmöffnungen 12 des Abstripprohrs 6 über ein ringscheibenförmiges Deckteil 13 mit letzterem dicht verbunden. Im inneren Ringraum 14 zwischen dem Abstripprohr 6 und dem inneren Rohrabschnitt 7 aufwärts steigendes Gas kann somit nicht an der Außenseite des Abstripprohrs innerhalb des Brunnenrohrs 4 nach oben abfließen. Es gelangt vielmehr durch die Überströmöffnungen 12 in den vom Abstripprohr 6 begrenzten Raum. Der innere Rohrabschnitt 7 weist eine untere Kante 15 auf, die höher liegt als die durch einen ringscheibenförmigen Boden 16 miteinander verbundenen entsprechenden Kanten 17 des Abstripprohrs 6 bzw. des äußeren Rohrabschnitts 8. Zwischen dem inneren Rohrabschnitt 7 und dem äußeren Rohrabschnitt 8 befindet sich ein äußerer Ringraum 18, der im Bereich der Abströmöffnungen 11 des Brunnenrohrs 4 mündet. Das unter der Wirkung des aus dem Begaser 9 austretenden frischen Treibgases, das in Form kleiner Gasperlen 19 innerhalb des Abstripprohrs 6 nach aufwärts strömt, angehobene Grundwasser fließt in Richtung der Pfeile 20 durch die Überströmöffnungen 12 in den inneren Ringraum 14 und in diesem nach abwärts, um schließlich, wie durch Pfeile 21 angedeutet, um die untere Kante 15 des inneren Rohrabschnitts 7 herum in den äußeren Ringraum 18 einzutreten. Dort fließt das dekontaminierte Grundwasser nach aufwärts, um schließlich durch die Abströmöffnungen 11 in das außerhalb des Brunnenrohrs 4 befindliche Erdreich überzutreten. Der Strömungsverlauf ist schematisch in Fig. 1 durch Pfeile 22 angedeutet.

In Fig. 3 ist ferner gezeigt, daß im unteren Bereich des inneren Ringraums 14 ein zusätzlicher Begaser 23 vorgesehen ist, um das im inneren Ringraum 14 nach abwärts strömende Grundwasser von noch mitgeführten, leicht flüchtigen Kohlenwasserstoffen zu reinigen. Dieses vom zusätzlichen Begaser 23 stammende Treibgas tritt im Bereich der Überströmöffnungen 12, wie durch Pfeile 24 veranschaulicht, in das innere des Abstripprohrs 6 über.

Aus Fig. 3 ist ferner ersichtlich, daß das untere Ende des Brunnenrohrs 4 als Vorfilter 25 für das eintretende Grundwasser ausgebildet ist. Ferner ist am unteren Ende des Brunnenrohrs 4 ein Schlammfang mit einer unmittelbar darunter gelegenen Schlammpumpe 26 angeordnet. Zu dieser ist zweckmäßigeweise durch das Abstripprohr 6 hindurch ein nicht näher veranschaulichtes Förderrohr geführt. Es gibt Einsatzfälle, in denen es günstig ist, wenn das untere Ende des Brunnenrohrs geschlossen ist, sodaß nur das seitliche Vorfilter 25 den Eintritt des Grundwassers ermöglicht.

Wie bereits erwähnt, ist die erfindungsgemäße Anlage bei Verwendung von die Schadstoffe abbauenden Mikroorganismen, beispielsweise im Falle von Verunreinigungen auch durch weniger leicht flüchtige Kohlenwasserstoffe auch als Bioreaktor einsetzbar. Die Mikroorganismen lassen sich über ein nicht gezeigtes Zuleitrohr durch das Abstripprohr 6 hindurch in den unteren Bereich in der Nähe des Begasers 9 einführen. Im Abstand vom Brunnenrohr in das Erdreich vorzugsweise ringförmig eingebrachte Beobachtungsbrunnen 27 dienen dann gleichzeitig auch als Versorgungsbrunnen zum Eintrag von Salzen und/oder Nährlösungen sowie gegebenenfalls auch zusätzlichem Sauerstoff, z. B. über Wasserstoffperoxid, für die Mikroorganismen. Eine Sauerstoffzufuhr findet statt, wenn es sich um aerob arbeitende Mikroorganismen handelt. Im Falle von anaerob aktiven Mikroorganismen wird auf die Sauerstoffzufuhr verzichtet, und über die Begaser 9 und 23 wird selbstverständlich inertes Gas, beispielsweise Stickstoff zugeführt. Der Einsatz von kostspieligerem, inertem Gas ist deshalb ohne weiteres möglich, weil es nach dem Austritt aus der Abstripprohrmündung aufgefangen, in einem Aktivkohlefilter gereinigt und anschließend wieder in den Kreislauf zurück, d.h. den Begasern zugeführt werden kann. Im Bedarfsfall ist auch die Anordnung mehrerer Gruppen von Beobachtungsbrunnen 27 möglich, wenn über sie ein immer ausgedehnterer Bereich rings um das Brunnenrohr herum erfaßt werden soll.

## Patentansprüche

1. Anlage zur in-situ-Dekontamination von mit Kohlenwasserstoffen durchsetztem Grundwasser, mit einem Brunnenrohr (4), das bis unter den Grundwasserspiegel (3) reicht, und eine in das Brunnenrohr einsetzbare, ebenfalls unterhalb des Grundwasserspiegels endende Rohreinheit (5) aus einem Abstripprohr (6) **gekennzeichnet** durch mindestens zwei das Abstripprohr konzentrisch mit Abstand umgebenden, miteinander und mit dem Abstripprohr fest verbundenen Rohrabschnitten nämlich einem inneren Rohrabschnitt (7) und einem äußeren Rohrabschnitt (8), sowie einem unterhalb des Abstripprohrs (6) mündenden Begaser (9), wobei der äußere Rohrabschnitt (8) eine Abdichtung (10) gegenüber dem Brunnenrohr (4) aufweist und mit seiner Oberkante in Höhe von im Brunnenrohr (4) vorgesehenen Abströmöffnungen (11) liegt, denen im Abstripprohr (6) oberhalb des Grundwasserspiegels Überströmöffnungen (12) zugeordnet sind, wobei der innere Rohrabschnitt (7) mit seiner Oberkante (13) oberhalb der Überströmöffnungen (12) des Abstripprohrs (6) gegenüber letzterem abgedichtet ist und mit seiner unteren Kante (15) der Umlenkung des im inneren Ringraum (14) zwischen dem Abstripprohr und dem inneren Rohrabschnitt abwärts und im äußeren Ringraum (18) zwischen innerem Rohrabschnitt und äußerem Rohrabschnitt aufwärts zu den Abströmöffnungen (11) strömenden Grundwassers dient.

2. Anlage nach Anspruch 1, **dadurch gekennzeichnet**, daß im unteren Bereich des inneren Ringraums (14) ein zusätzlicher Begaser (23) vorgesehen ist.

3. Anlage nach einem der Ansprüche 1 oder 2, **dadurch gekennzeichnet**, daß am unteren Ende des Brunnenrohrs (4) eine Schlammpumpe (26) angeordnet ist.

4. Anlage nach einem der Ansprüche 1 bis 3, **dadurch gekennzeichnet,** daß das untere Ende des Brunnenrohrs (4) als Vorfilter (25) für das eintretende Grundwasser ausgebildet ist.

5. Anlage nach Ansprüche 1 oder 4, die als Bioreaktor unter Verwendung von die Schadstoffe abbauenden Mikroorganismen dient, **dadurch gekennzeichnet,** daß für die Zufuhr der Mikroorganismen ein durch das Abstripprohr hindurch in den unteren Bereich in der Nähe des Begasers (9) geführtes Rohr vorgesehen ist.

6. Anlage nach Anspruch 5, **dadurch gekennzeichnet**, daß im Abstand vom Brunnenrohr (4) in das Erdreich eingebrachte Beobachtungsbrunnen (27) vorgesehen sind, die gleichzeitig als Versorgungsbrunnen zum Eintrag von Salzen und/oder Nährlösungen und Sauerstoff, für die Mikroorganismen ausgebildet sind.

## Claims

1. Installation for the in situ decontamination of groundwater mixed with hydrocarbons, having a well pipe (4) which extends below the groundwater table (3), and a pipe unit (5) comprising a stripping pipe (6), which can be inserted in the well pipe and also ends beneath the groundwater table, characterised by at least two pipe sections which surround the stripping pipe concentrically at a distance and are solidly connected together and to the stripping pipe, these pipe sections being an inner pipe section (7) and an outer pipe section (8), as well as a gas supplier (9) opening out beneath the stripping pipe (6), the outer pipe section (8) having a seal (10) with respect to the well pipe (4) and being located with its upper edge at the level of discharge openings (11) provided in the well pipe (4), with overflow openings (12) in the stripping pipe (6) above the groundwater table being associated with the discharge openings (11), the inner pipe section (7) being sealed with respect to the stripping pipe (6) by means of its upper edge (13) above the overflow openings (12) in the stripping pipe (6) and serving, by means of its lower edge (15), for deflecting the groundwater flowing downwards in the inner annular space (14) between the stripping pipe and the inner pipe section and upwards, towards the discharge openings (11), in the outer annular space (18) between the inner pipe section and the outer pipe section.

2. Installation according to claim 1, characterised in that, in the lower region of the inner annular space (14), an additional gas supplier (23) is provided.

3. Installation according to one of claims 1 or 2, characterised in that, at the lower end of the well pipe (4), a mud pump (26) is arranged.

4. Installation according to one of claims 1 to 3, characterised in that the lower end of the well pipe (4) is formed as a preliminary filter (25) for the incoming groundwater.

5. Installation according to claims 1 or 4, which serves as a bioreactor with the use of microorganisms which degrade the contaminants, characterised in that, for supplying the microorganisms, there is provided a pipe which leads through the stripping pipe into the lower region near the gas supplier (9).

6. Installation according to claim 5, characterised in that, at a distance from the well pipe (4), there are provided observation wells (27) placed in the ground, which are also constructed as supply wells for introducing salts and/or nutrient solution and oxygen for the microorganisms.

## Revendications

1. Installation pour la décontamination in situ des eaux souterraines polluées par des hydrocarbures, comprenant un tube de puits (4) qui s'étend jusqu'à en dessous de la surface de nappe souterraine (3) et une unité de tube (5), pouvant être placée dans le tube de puits, se terminant également en dessous de la surface de la nappe souterraine, constituée d'un tube de lavage (6), caractérisée par au moins deux tronçons de tube entourant concentriquement le tube de lavage à une certaine distance, reliés entre eux et reliés solidement au tube de lavage, à savoir un tronçon de tube interne (7) et un tronçon de tube externe (8), ainsi qu'un diffuseur de gaz (9) débouchant en dessous du tube de lavage (6), le tronçon de tube externe (8) présentant un joint d'étanchéité (10) par rapport au tube de puits (4) et se situant par son arête supérieure à la hauteur des ouvertures d'évacuation (11) prévues dans le tube de puits (4) auxquelles sont associées dans le tube de lavage (6) au-dessus de la surface de nappe souterraine des ouvertures de trop-plein (12), le tronçon de tube interne (7) avec son arête supérieure (13) au-dessus des ouvertures de trop-plein (12) du tube de lavage étant rendu étanche par rapport à celui-ci, et son arête inférieure (15) servant à la déviation des eaux souterraines s'écoulant dans l'espace annulaire interne (14) entre le tube de lavage et le tronçon de tube interne vers le bas et dans l'espace annulaire externe (18) entre le tronçon de tube interne et le tronçon de tube externe vers le haut vers les ouvertures d'évacuation (11).

2. Installation selon la revendication 1, caractérisée en ce qu'un diffuseur de gaz supplémentaire (23) est prévu dans la zone inférieure de l'espace annulaire interne (14).

3. Installation selon l'une des revendications 1 ou 2, caractérisée en ce qu'une pompe à boue (26) est disposée à l'extrémité inférieure du tube de puits (4).

4. Installation selon l'une des revendications 1 à 3, caractérisée en ce que l'extrémité inférieure du tube de puits (4) est réalisée comme filtre préliminaire (25) pour les eaux souterraines entrantes.

5. Installation selon les revendications 1 ou 4, qui sert de bioréacteur lors de l'utilisation de micro-organismes détruisant les matières nocives, caractérisée en ce qu'il est prévu pour l'amenée des microorganismes un tube qu'on fait passer à travers le tube de lavage dans la zone inférieure au voisinage du diffuseur de gaz (9).

6. Installation selon la revendication 5, caractérisée en ce que des puits d'observation (27) introduits dans la terre sont prévus à une certaine distance du tube de puits (4) et qui sont réalisés en même temps comme puits d'alimentation pour l'introduction de sels et/ou de bouillons de culture et d'oxygène pour les microorganismes.
